# EUROPEAN PATENT APPLICATION

(11) **EP 2 196 816 A1**
(43) Date of publication of application: **16.06.2010**
(21) Application number: 08382076.1
(22) Date of filing: 13.12.2008
(51) Int. Cl.: G01S 5/02

(54) **Real time location system with ZigBee technology**

(71) Applicant: Tulecom Group S.L., 37188 Carbajosa de la Sagrada Salamanca (ES)
(72) Inventor: Nunez Salas, Isabel Maria, 37006 Salamanca (ES); Saavedra Lorenzo, Alberto, 37008 Saöamanca (ES); Tapia Martinez, Dante Israel, 37008 Salamanca (ES); Garcia Garcia, Oscar, 37008 Salamanca (ES)

(57) **Abstract**

The Real-Time Location System with ZigBee Technology can be applied indoors and outdoors. It makes use of the IEEE 802.15.4/ZigBee standard that operates in unlicensed frequency bands (868 MHz in Europe, 915 MHz in USA and 2.4 GHz almost worldwide). This standard has a lower power consumption (compared with technologies such as Wi-Fi, UWB, GPS, GSM, etc.), its cost is relatively affordable, its implementation is fast and has a greater ease of deployment. The Real-Time Location System with ZigBee Technology consists of a set of *Nodes* and *Tags* that form a mesh of devices that communicate with each other. The *Nodes* serve as reference for the *Tags*. A *Data Manager* device collects the information transmitted by the *Nodes* and processes it to automatically determine the position of the *Tags.* Each user or object has a *Tag* with a unique identifier associated.

## Description

### BACKGROUND:

Real-Time Location Systems (RTLSs) provide people, objects and resources location and tracking. These systems are generally based on wireless communication technologies. A RTLS is composed of a set of wireless transmitters and receivers. There are two types of transmitters and receivers: fixed and mobile. Fixed transmitters and receivers perform as reference for mobile ones, determining their position/location. RTLS does not use a universal technology mainly because of the weakness of one against other. Currently, the most used technologies in RTLS are:
- **GPS:** A GPS (*Global Positioning System*) based RTLS basically consists of a set of satellites (fixed transmitters in the Earth orbit) which constantly transmit information to mobile receivers in the Earth. The receivers calculate their position based on the coordinates of the satellites, so the more referrals from satellites are taken, the precision achieved is greater. It is necessary to have at least three satellite references to calculate position.
- **GSM/GPRS:** Operators of mobile phones also offer location services. Its operation is based on using the same network of antennas that provides telephony service. In this case, the location can be done both in the mobile device and by the service provider, due to both terrestrial antennas and mobile devices can perform as transmitters and receivers. There are used several parameters for calculating the location, such as the signal time of arrival, the angles of incidence, the triangulation of signals or the cells of belonging.
- **AGPS:** This is a mixed technology usually implemented in mobile devices that have a GPS receiver. AGPS (Assisted GPS) uses the signals provided by the satellites and from the mobile telephony networks. It is used in two circumstances: when the GPS signal is low; and when the mobile device begins running the GPS device, moment in which the device gets its position in the mobile phone network to assist the GPS.
- **RFID:** The Radio Frequency IDentification (RFID) technology is another alternative used to develop RTLS. Its operation is based on a network of readers and *tags.* The readers transmit a constant RF signal which is collected by the *tags.* Then, the *tags* respond to readers by sending an identification number. In this type of location, each reader covers an area through its RF signal (i.e. area coverage). When a *tag* passes through a specific coverage area, it is said that the *tag* is physically in that area.
- **Wi-Fi:** Wi-Fi based RTLSs make use of wireless devices for calculating the position of users and resources. These kind of systems use a network of static devices (transmitters and receivers) operating as a reference for mobile devices. The static devices calculate the position of mobile devices by means of the signals received by the mobile nodes. There are several techniques for processing those signals and determine their position, including symbolic location or signpost, triangulation, hyperbolic positioning and so on.
- **UWB:** These systems use UWB (Ultra Wide Band) technology as communication protocol. The operation is similar to Wi-Fi based Systems but considerably improving the accuracy, achieving optimistic ranges of error of up to 10cm.

Thus, most RTLSs consist of three main elements:
1. Nodes: Devices that calculate the position of an object. There are two types of nodes:
   a. Fixed. They work as a reference for mobile devices.
   b. Mobile. They provide support for fixed nodes for improving precision.
2. Tags: Devices on which the location is performed.
3. Data Manager: Devices and systems that process information to determine the location of the nodes and tags.

Although these methods are widely used and offer a relatively efficient operation, they present significant limitations, including:
- GPS is limited to open environments (outdoors) where the satellite signals can be received and therefore can not be used inside tunnels, homes, office buildings, etc.
- GSM can only be used where there is mobile phone coverage. In addition, the accuracy achieved is very poor (with error ranges of even kilometers). The precision is increased using more antennas.
- In RFID, the accuracy is limited to the reading area that can be covered by the readers. If more precision is required, it is necessary to reduce the reading area and install more proximate readers, which greatly increases the cost of deploying the system.
- UWB operates in restricted frequency bands. In addition, its implementation and deployment costs are high mainly because the RF signals used do not go through most of materials used in buildings (e.g. concrete, metal, etc.), which makes these systems difficult to use indoors.

### OPERATION:

The basic operation of the Real-Time Location System with ZigBee Technology consists of a set of *Tags* (wireless devices) carried on by people or assets to be located. *Tags* transmit information to a set of *Router Nodes* with known position which in turn forward the information to a *Master Node. A Data Manager* device (e.g. computer) collects the information provided by the *Master Node* to determine the position of the *Tags.* The location of each *Tag* can be represented on any display device (e.g. monitor, projector, etc.) connected to the *Data Manager* locally or remotely.

### System components:

The Real-Time Location System with ZigBee Technology has a set of elements situated all over the space where the location is required:
- *Fixed transmitter*/*receiver node* serving as the network coordinator.
- *Fixed transmitters*/*receiver nodes* that transmit information among them and also serve as reference to calculate the position of the *Tags.*
- *Mobile Tags* that must be carried by every user or object to be located.
- *Data Manager (with processing software)* for processing and displaying information. It can also act as a server to provide information to other devices (e.g. computers) via a network interconnection.

### Basic Operation:

The Real-Time Location System with ZigBee Technology consists of four elements:
1. **Master Node.** It is the network coordinator, in other words it is responsible for creating the network and setting its parameters. It allows the connection of other wireless devices. It also can perform as another *Router* in the network. It is responsible for obtaining all information provided by the *Routers.* Then, the information is transmitted to the *Data Manager* which in turn calculates the position of each *Tag.*
2. **Routers Nodes.** These devices are responsible for relaying ZigBee packets from one device to another by creating a mesh of wireless *Nodes* and *Tags.* These wireless devices are strategically placed in spaces to be monitored. In an advanced location application which not only requires the detection of nearby *Tags* but also measures relative distances, the system will require a calibration depending on the scenario where the system is deployed. Each *Router* stores a list of *Tags* situated in its coverage space/area. They also store information about certain parameters of the connections. All information is transmitted to the *Master Node* periodically or on demand.
3. **Tags.** These wireless devices are carried by the users or objects to be located. *Tags* do not route ZigBee packets but only send information about their identity to the nearby *Routers.* Usually, their processing capabilities and functional specifications are lower than other devices (i.e. *Routers* and *Master Node*). This is desirable because *Tags* should be small, cheap, simple, and should have the lowest possible power consumption.
4. **Data Manager.** This device is responsible for managing and monitoring the RTLS functionalities. Its main functions consist of: storing the positions of the *Nodes*; informing of the position of each *Tag*; managing users and objects in the system; providing data for local and remote interfaces; and any additional functionality else within the system.

### Data Transmission:

- The connection between the *Master Node* and the *Data Manager* is done through the USB or RS-232 ports. It is possible to perform this connection via SDIO, Express Card, etc. using an internal ZigBee modem.
- Communications between *Nodes* and *Tags* are made using the IEEE 802.15.4/ZigBee standard.

### Identity Tracking:

The Real-Time Location System with ZigBee Technology associates the ID number of each *Tag* to the respective user or object through the *Data Manager.* This makes it possible to know the location of each *Tag* (i.e. user or object) in a unique way. In addition, it is possible to obtain value-added information and search for users and objects based on certain criteria.

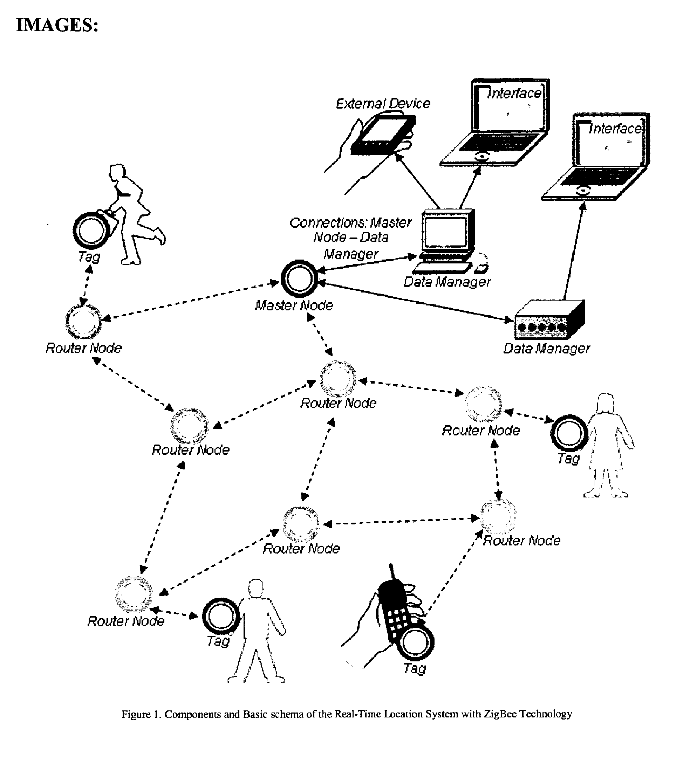

## Claims

1. The Real-Time Location System with ZigBee Technology shall uniquely identify all users and objects within the space/area of influence of the system.

2. The Real-Time Location System with ZigBee Technology shall always know the location of users and objects within the space/area of influence of the system.

3. The Real-Time Location System with ZigBee Technology shall enable the identification of users and objects without requiring interaction from them.

4. In the Real-Time Location System with ZigBee Technology, *Tags* shall periodically send a signal for reporting their identifier (ID).

5. In the Real-Time Location System with ZigBee Technology, *Master Nodes* and *Router Nodes* shall receive a periodic signal emitted by *Tags. Nodes* (*Master* and *Routers*) shall detect the signal and store a data set that includes the identifier of the *Tag,* the signal strength and a timestamp defining the moment when the signal is received. *Nodes* (*Master* and *Routers*) shall update all entries (i.e. data set) each time it is received a signal from a *Tag.* Each entry shall be valid for a certain period of time (a configurable parameter of the system).

6. In the Real-Time Location System with ZigBee Technology, the updated entries (data) in each *Router Node* shall be sent periodically or on demand to the *Master Node* via the ZigBee network. The *Master Node* shall forward this information to the *Data Manager* for determining the position of each *Tag* by means of a set of location algorithms.

7. The Real-Time Location System with ZigBee Technology shall allow sending alert messages to *Tags* which shall be notified by optical, mechanical or acoustic media.

8. The Real-Time Location System with ZigBee Technology shall enable users to confirm the receipt of alert messages received on their devices (*Tags*).

9. The Real-Time Location System with ZigBee Technology shall enable users to generate signals that shall be sent to the *Data Manager* to be interpreted as alerts or notifications.

10. The Real-Time Location System with ZigBee Technology shall alert the *Data Manager* that the battery level of a *Router Node* or *Tag* is below a certain threshold configurable as a parameter.

11. The Real-Time Location System with ZigBee Technology shall alert each user that the battery level of its respective *Tag* has fallen below a certain threshold configurable as a parameter.

12. In the Real-Time Location System with ZigBee Technology, *Nodes* (*Master* and *Routers*) shall be able to be connected to *expansion devices* that shall allow to expand the communication capabilities with external devices through GPIO (General Purpose In / Out), ADC (Analog-to-Digital Converter) and I²C (Inter-Integrated Circuit) connections. These connections shall be remotely controlled and shall be able to be used for further communications and for obtaining readings from analog and digital sensors/actuators automatically.

13. In the Real-Time Location System with ZigBee Technology, the *Master Node* shall be connected to the *Data Manager* through a USB (Universal Serial Bus) or Ethernet standard bus. The *Master Node* and the *Data Manager* shall maintain a continuous two-way communication through this connection.

14. In the Real-Time Location System with ZigBee Technology, the *firmware* (software embedded in the internal microcontroller of the devices) of *Nodes* (*Master* and *Routers*) and *Tags* shall be able to be updated via USB. These updates shall include improvements in the *firmware* of the devices and shall also allow establishing certain parameters, such as the ID, network configuration, as well as other operating parameters of the system.

15. In the Real-Time Location System with ZigBee Technology, several devices (e.g. computers) shall be able to be simultaneously connected to the *Data Manager,* so that the information shall be able to be accessed and displayed locally or remotely.

16. In the Real-Time Location System with ZigBee Technology, the configuration of the system shall be able to be modified from several devices (e.g. computers). Configuration shall be able to affect *Nodes* (*Master* and *Routers*) and *Tags.*

17. In the Real-Time Location System with ZigBee Technology, it shall be possible to track *Tags* and also register their position and the alerts generated from them.

18. In the Real-Time Location System with ZigBee Technology, it shall be possible to know the location of specific users or objects from several devices connected to the *Data Manager.*

19. In the Real-Time Location System with ZigBee Technology, it shall be possible to transmit an alert to a single *Tag* or a group of *Tags* from several devices connected to the *Data Manager.* In addition, users and objects shall be able to respond to these alerts. The system shall store all actions.

20. In the Real-Time Location System with ZigBee Technology, it shall be possible to establish determined spaces/areas to be independently monitored.

21. The Real-Time Location System with ZigBee Technology shall alert the user with special privileges if a user or object is located in an area to which access is restricted.

22. In the Real-Time Location System with ZigBee Technology, it shall be possible to establish relationships between users or objects to determine if they are in restricted areas, thus sending the respective alerts.

23. The Real-Time Location System with ZigBee Technology shall encrypt all the ZigBee communication in the system.

24. The Real-Time Location System with ZigBee Technology shall manage the encryption keys used in ZigBee communications between the *Data Manager, Nodes* (*Master* and *Routers*) and *Tags.*

25. The Real-Time Location System with ZigBee Technology shall allow encrypting all wired or wireless connections made between the *Data Manager* and remote devices (e.g. computers) connected to it.
